# EUROPÄISCHE PATENTSCHRIFT

(11) **EP 1 307 880 B1**
(45) Veröffentlichungstag und Bekanntmachung des Hinweises auf die Patenterteilung: **15.02.2012**
(21) Anmeldenummer: 01934008.2
(22) Anmeldetag: 23.05.2001
(51) Int. Cl.: G11B 7/0065

(54) **Verfahren zum Speichern holographischer Information**
Method of storing holographical information
Procédé d'enregistrement d'information holographique

(30) Priorität: 11.08.2000 DE 10039374
(43) Veröffentlichungstag der Anmeldung: 07.05.2003
(73) Patentinhaber: tesa scribos GmbH, 69126 Heidelberg (DE)
(72) Erfinder: STADLER, Stefan, 25474 Hasloh (DE); GERSPACH, Matthias, 76646 Bruchsal (DE); DIETRICH, Christoph, 69126 Heidelberg (DE); LEIBER, Jörn, 22529 Hamburg (DE); NOEHTE, Steffen, 69469 Weinheim (DE)
(74) Vertreter: Both, Georg
(86) Internationale Anmeldenummer: PCT/EP2001/005931
(87) Internationale Veröffentlichungsnummer: WO 2002/015178

(56) Entgegenhaltungen:
- EP-A- 0 403 971
- EP-A- 0 552 887
- EP-A- 0 613 126
- WO-A-00/54112
- US-A- 5 958 650
- YASUHIDE NISHIDA ET AL: "MIRROR HOLOGRAM RECORDING WITH A PHASE-CHANGE MEDIUM", APPLIED OPTICS, OPTICAL SOCIETY OF AMERICA, US, vol. 33, no. 29, 10 October 1994 (1994-10-10), pages 6805-6810, XP000473149, ISSN: 0003-6935
- Hering, Ekbert; Martin, Rolf; Stohrer, Martin: "Physik für Ingenieure; 3., verbesserte Auflage", 31 December 1989 (1989-12-31), VDI-Verlag GmbH, Düsseldorf ISBN: 3-18-400916-5 pages 465-468, * the whole document *

## Beschreibung

Die Erfindung betrifft einen holographischen Datenspeicher, der z.B. zum Speichern von Bilddaten wie Fotos, Logos, Schrift, usw., aber auch zum Speichern von anderen Daten verwendet werden kann.

In einem Hologramm ist über die Fläche des Hologramms verteilt holographische Information über ein Objekt enthalten, aus der sich bei Bestrahlung mit Licht, insbesondere kohärentem Licht von einem Laser, ein Bild des Objektes rekonstruieren lässt. Hologramme werden in der Technik auf vielfältige Weise genutzt, z.B. in Form von weitgehend fälschungssicheren Kennzeichnungen. Derartige Kennzeichnungen finden sich z.B. auf Kreditkarten oder Scheckkarten; sie zeigen als sogenannte Weißlicht-Hologramme auch bei Beleuchtung mit natürlichem Licht ein dreidimensionales Bild des dargestellten Objekts. Verbreitet sind fotographisch hergestellte Hologramme sowie Prägehologramme, bei denen in die Oberfläche eines Werkstoffs eine Reliefstruktur eingeprägt ist, an der das zum Wiedergeben des Objekts verwendete Licht entsprechend der in dem Hologramm gespeicherten Information gestreut wird, so dass das rekonstruierte Bild des Objekts durch Interferenzeffekte entsteht.

In der WO 00/17864 ist ein Datenspeicher mit einem optischen Informationsträger beschrieben, der eine als Speicherschicht eingerichtete Polymerfolie enthält. Die Polymerfolie besteht z.B. aus biaxial orientiertem Polypropylen. Bei dem vorbekannten Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines auf eine vorgewählte Lage fokussierten Schreibstrahls eines Datenlaufwerks lokal erwärmt wird, wodurch sich die Brechzahl der Polymerfolie und das Reflexionsvermögen an der Grenzfläche der Polymerfolie lokal ändern. Dies kann mit Hilfe eines entsprechend fokussierten Lesestrahls in dem Datenlaufwerk erfasst werden, da der Lesestrahl je nach eingeschriebener Information lokal mehr oder weniger stark an der Grenzfläche der Polymerfolie reflektiert wird.

Die Veröffentlichung von Nishida et al. "Mirror hologram recording with a phase-change medium" (Applied Optics, Vol. 33, No. 29, Seiten 6805-6810) beschreibt ein Verfahren zum Speichern holographischer Information mit den Merkmalen des Oberbegriffs des geltenden Anspruchs 1. Der dabei verwendete Datenspeicher hat eine Speicherschicht, bei der zum Speichern ein großer Unterschied der Brechzahl zwischen einem amorphen Zustand und einem kristallinen Zustand ausgenutzt wird. Die offenbarten Hologramme sind primär Phasenhologramme und keinesfalls (reine) Amplitudenhologramme. Um die Information aus einer Speicherschicht mit der verwendeten GeTe-Legierung auszulesen, braucht man Hilfsmittel wie ein Computerprogramm. Der beschriebene Datenspeicher lässt sich nicht zum Speichern von Direktinformation nutzen, d.h. die gewünschte Information kann in der Speicherschicht nicht als unmittelbar erkennbare Information, z.B. als Bild oder Schriftzug, abgelegt werden; auch eine Lupe oder ein Mikroskop reichen nicht zum Erkennen aus.

Es ist Aufgabe der Erfindung, ein Verfahren bereitzustellen, mit dem nicht nur holographische Information in einer Speicherschicht gespeichert werden kann, sondern das auch zum Speichern von Direktinformation in derselben Speicherschicht tauglich ist.

Dieses Problem wird gelöst durch ein Verfahren zum Speichern holographischer Information mit den Merkmalen des geltenden Anspruchs 1 sowie durch ein Verfahren zum Auslesen holographischer Information mit den Merkmalen des geltenden Anspruchs 12. Vorteilhafte Ausgestaltungen der Erfindung ergeben sich aus den abhängigen Ansprüchen.

Der erfindungsgemäße holographische Datenspeicher hat eine Speicherschicht, die einen durch Belichtung veränderbaren, vorzugsweise ausbleichbaren oder zerstörbaren, Farbstoff aufweist. Die Speicherschicht ist zum Speichern von holographischer Information über das lokale Absorptionsvermögen in der Speicherschicht eingerichtet. Beim Auslesen von Information aus dem holographischen.Datenspeicher wird die Speicherschicht durchstrahlt, wobei das infolge von Veränderungen in dem Farbstoff lokal variierende Absorptionsvermögen in der Speicherschicht die Strahlung beeinflusst, was die Rekonstruktion eines holographischen Bildes ermöglicht. Der lokale Bereich zum Speichern einer Informationseinheit (im Folgenden als "Pit" bezeichnet) hat typischerweise lineare Abmessungen (d.h. zum Beispiel eine Seitenlänge oder einen Durchmesser) in der Größenordnung von 0,5 µm bis 1 µm, aber auch andere Größen sind möglich. Der erfindungsgemäße holographische Datenspeicher ist kostengünstig und kann auf vielfältige Weise angewendet werden.

Vorzugsweise werden die Moleküle des Farbstoffs bei Belichtung mit Strahlung, die zum Eingeben von Information in den holographischen Datenspeicher dient, ausgebleicht oder zerstört. Unter "Ausbleichen" versteht man die Schädigung des chromophoren Systems eines Farbstoffmoleküls durch Anregung mit intensivem Licht geeigneter Wellenlänge, ohne dabei das Grundgerüst des Farbstoffmoleküls zu zerstören. Das Farbstoffmolekül verliert dabei seine Farbeigenschaften und wird bei ausreichender Belichtung für das zum Bleichen verwendete Licht optisch transparent. Wird dagegen auch das Grundgerüst eines Farbstoffmoleküls zerstört, spricht man bei der durch die Belichtung bewirkten Veränderung von "Zerstörung" des Farbstoffs. Das zum Belichten, also zum Eingeben von Information verwendete Licht muss nicht im sichtbaren Wellenlängenbereich liegen.

Hinter der Speicherschicht ist eine Reflexionsschicht angeordnet, so dass die Speicherschicht beim Auslesen von Information zweimal durchstrahlt wird. Eine derartige Ausgestaltung ermöglicht es zum Beispiel, die Speicherschicht auf einer nichttransparenten Unterlage anzubringen.

Vorzugsweise ist ein Träger für die Speicherschicht vorgesehen. Der Träger kann z.B. eine Polymerfolie aufweisen, die auch als transparente Polymerfolie gestaltet sein kann. Es ist aber auch denkbar, einen nichttransparenten oder einen biegesteifen Träger zu benutzen. Als Material kommen z.B. Metalle oder Kunststoffe in Frage.

Bei einer bevorzugten Ausgestaltung der Erfindung weist die Speicherschicht eine Polymermatrix auf, in die Farbstoffmoleküle eingebettet sind. Vorzugsweise sind die Farbstoffmoleküle homogen in der Speicherschicht oder einem Teil der Speicherschicht verteilt. Als Materialien für die Polymermatrix bieten sich Polymere oder Copolymere hoher optischer Qualität an, wie z.B. Polymethylmethacrylat (PMMA) oder noch besser die temperaturstabileren Polyimide oder Polyetherimide bzw. Polymethylpenten. Andere Beispiele sind Polycarbonat oder cycloolefinische Copolymere. Beim Herstellen eines erfindungsgemäßen holographischen Datenspeichers kann eine Polymermatrix, die Farbstoff enthält, z.B. durch Spin-Coating oder durch Aufrakeln auf einen Träger oder auf einen zuvor mit einer Reflexionsschicht versehenen Träger aufgebracht werden. Alternativ bieten sich auch Drucktechniken an, um den Farbstoff auf einen Träger aufzubringen, wobei der Farbstoff vorzugsweise ebenfalls in eine Polymermatrix eingebettet ist, die als Bindemittel dient.

Als Farbstoff sind leicht ausbleichbare Farbstoffe besonders geeignet, wie z.B. Azo- und Diazofarbstoffe (z.B. die Sudanrot-Familie). So lässt sich bei Farbstoffen aus der Sudanrot-Familie Information mit einem Schreibstrahl einer Lichtwellenlänge von 532 nm eingeben. Vorzugsweise sind derartige Farbstoffe jedoch nicht so instabil gegen Belichtung, das bereits durch Umgebungslicht (Sonne, künstliche Beleuchtung) ein Bleichvorgang einsetzt. Wenn der Schreibstrahl mit einem Laser erzeugt wird, lassen sich deutlich höhere Intensitäten in der Speicherschicht erzielen als bei Belichtung durch Umgebungslicht, so dass Farbstoffe zur Verfügung stehen, die eine gegen Umgebungslicht zumindest weitgehend unempfindliche Speicherschicht ermöglichen. Der Farbstoff muss also nicht lichtempfindlich sein, ganz im Gegensatz zu einem fotographischen Film. Soll der Farbstoff der Speicherschicht dagegen nicht ausgebleicht, sondern mit höherer Laserleistung zerstört werden, kann man auf eine Vielzahl von Farbstoffen zurückgreifen. Vorzugsweise ist dabei das Absorptionsmaximum des jeweiligen Farbstoffs an die Wellenlänge des als Schreibstrahl verwendeten Lasers angepasst. Weitere geeignete Farbstoffe sind Polymethinfarbstoffe, Arylmethinfarbstoffe sowie Aza[18]annulen-Farbstoffe.

Bei einer bevorzugten Ausgestaltung der Erfindung weist der holographische Datenspeicher eine Klebeschicht zum Aufkleben des Datenspeichers auf einen Gegenstand auf. Die Klebeschicht ermöglicht es, den Datenspeicher schnell und problemlos auf einen gewünschten Gegenstand zu kleben, z.B. um den Datenspeicher als maschinenlesbares Etikett zu nutzen, in dem Information über den Gegenstand gespeichert ist. Als Klebeschicht eignet sich insbesondere eine Selbstklebeschicht oder eine Schicht mit einem druckempfindlichen Kleber, die vorzugsweise im Lieferzustand des Datenspeichers mit einer abziehbaren Schutzabdeckung (z.B. aus einer Folie oder einem Silikonpapier) versehen ist.

Außer den bisher erwähnten Schichten oder Lagen kann der erfindungsgemäße Datenspeicher auch zusätzliche Lagen aufweisen, z.B. eine Schutzschicht aus einem transparenten Lack oder Polymer, die vor der Speicherschicht angeordnet ist. Eine optionale Klebeschicht befindet sich vorzugsweise hinter der Reflexionsschicht oder hinter dem mechanischen Träger.

Die zu speichernde Information wird in den erfindungsgemäßen holographischen Datenspeicher durch ein Verfahren eingegeben, bei dem in einem Hologramm eines Speicherobjekts enthaltene holographische Information als zweidimensionale Anordnung berechnet wird und ein Schreibstrahl einer Schreibeinrichtung, vorzugsweise eines Laserlithographen, auf eine Speicherschicht des Datenspeichers gerichtet und entsprechend der zweidimensionalen Anordnung so angesteuert wird, dass das lokale Absorptionsvermögen in der Speicherschicht gemäß der holographischen Information durch lokale Veränderung, vorzugsweise Ausbleichung oder Zerstörung, des Farbstoffs eingestellt wird. Da die physikalischen Vorgänge bei der Streuung von Licht an einem Speicherobjekt bekannt sind, kann z.B. ein herkömmlicher Aufbau zum Erzeugen eines Hologramms (bei dem kohärentes Licht von einem Laser, das von einem Objekt (Speicherobjekt) gestreut wird, mit einem kohärenten Referenzstrahl zur Interferenz gebracht wird und das dabei entstehende Interferenzmuster als Hologramm aufgenommen wird) mit Hilfe eines Computerprogramms simuliert und das Interferenzmuster als zweidimensionale Anordnung (zweidimensionaler Array) berechnet werden. Die Auflösung eines geeigneten Laserlithographen beträgt typischerweise etwa 50 000 dpi (dots per inch). Damit kann das Absorptionsvermögen in der Speicherschicht lokal in Bereichen oder Pits einer Größe von etwa 0,5 µm bis 1 µm verändert werden. Die Schreibgeschwindigkeit und andere Details hängen unter anderem von den Parametern des Schreiblasers (Laserleistung, Lichtwellenlänge) und der Belichtungsdauer sowie von dem Farbstoff und den Eigenschaften der Speicherschicht ab.

Die holographische Information wird also vorzugsweise in Form von Pits vorgegebener Größe in die Speicherschicht eingegeben; der Begriff "Pit" ist hier allgemein im Sinne eines veränderten Bereichs und nicht in seiner ursprünglichen Bedeutung als (mechanisches) Loch zu verstehen. Dabei kann in einem Pit die holographische Information in binär kodierter Form gespeichert werden. Das heißt, im Bereich eines gegebenen Pits nimmt die Speicherschicht nur einen von zwei möglichen Werten für das Absorptionsvermögen an. Diese Werte unterscheiden sich vorzugsweise deutlich, damit in der Praxis vorkommende zwischenwerte für das Absorptionsvermögen, die nahe bei dem einen oder dem anderen Wert liegen, eindeutig dem einen oder dem anderen Wert zugeordnet werden können, um die Information zuverlässig und eindeutig zu speichern.

Alternativ kann in einem Pit die holographische Information in kontinuierlich kodierter Form gespeichert werden, wobei das lokale Absorptionsvermögen in dem Pit aus einem vorgegebenen Wertebereich ausgewählt wird. Dies bedeutet, dass in einem gegebenen Pit das Absorptionsvermögen in der Speicherschicht einen beliebigen Wert aus einem vorgegebenen Wertebereich annehmen kann. In diesem Fall lässt sich die Information also "in Graustufen" abspeichern, so dass jedem Pit der Informationsgehalt von mehr als einem Bit zukommt.

Bei einem Verfahren zum Auslesen von Information aus einem erfindungsgemäßen holographischen Datenspeicher wird Licht, vorzugsweise kohärentes Licht (z.B. von einem Laser), großflächig auf eine Speicherschicht des Datenspeichers gerichtet, und die Speicherschicht des Datenspeichers wird in Transmission durchstrahlt, wobei das Licht gegebenenfalls an der Reflexionsschicht hinter der Speicherschicht reflektiert wird. Als Rekonstruktion der in dem durchstrahlten Bereich enthaltenen holographischen Information wird ein holographisches Bild in einem Abstand zu dem Datenspeicher erfasst, z.B. mit einem CCD-Sensor, der mit einer Datenverarbeitungseinrichtung verbunden ist.

Unter dem Begriff "großflächig" ist eine Fläche zu verstehen, die deutlich größer ist als die Fläche eines Pits. In diesem Sinne ist z.B. eine Fläche von 1 mm² großflächig. Für das Schema, nach dem Information in einem erfindungsgemäßen holographischen Datenspeicher abgelegt und ausgelesen wird, gibt es viele verschiedene Möglichkeiten. Es ist denkbar, den Datenspeicher auf einmal auszulesen, indem die gesamte Fläche der Speicherschicht auf einmal bestrahlt wird. Insbesondere bei größeren Flächen ist es jedoch vorteilhaft, die zu speichernde Information auf eine Anzahl oder Vielzahl von Einzelbereichen aufzuteilen (z.B. mit einer jeweiligen Fläche von 1 mm²) und die Information lediglich aus einem vorgegebenen Einzelbereich auf einmal auszulesen.

Beim Auslesen von Information wirkt der durchstrahlte Bereich der Speicherschicht wie ein Beugungsgitter, wobei das einfallende Licht infolge des lokal variierenden Absorptionsvermögens in einer definierten Art und Weise abgelenkt wird. Das abgelenkte Licht formt ein holographisches Bild des Speicherobjektes. Dieses Bild stellt die Rekonstruktion der über das variierende Absorptionsvermögen (Amplitudenmodulation) kodierten Information dar.

Der erfindungsgemäße holographische Datenspeicher lässt sich für unterschiedliche Arten von Speicherobjekten nutzen. So können sowohl die in Bildern wie z.B. Fotographien, Logos, Schrift, usw. enthaltene Information als auch maschinenlesbare Daten abgespeichert und ausgelesen werden. Letzteres erfolgt beispielsweise in Form sogenannter Datenseiten, wobei die in einem Hologramm eines graphischen Bitmusters (das die Dateninformation darstellt) enthaltene holographische Information wie erläutert in die Speicherschicht eingegeben wird. Beim Auslesen entsteht ein holographisches Bild dieses graphischen Bitmusters. Die darin enthaltene Information kann z.B. mit Hilfe eines genau justierten CCD-Sensors erfasst und über zugehörige Auswertesoftware verarbeitet werden. Für die Wiedergabe von Bildern, bei denen es nicht auf eine hohe Genauigkeit ankommt, reicht im Prinzip bereits eine einfache Mattscheibe oder z:B. eine Kamera mit einem LCD-Bildschirm.

Bei der holographischen Speicherung maschinenlesbarer Daten ist es vorteilhaft, dass die Information nicht sequentiell ausgelesen werden muss, sondern dass ein ganzer Datensatz auf einmal erfasst werden kann, wie erläutert. Sollte die Oberfläche der Speicherschicht beschädigt sein, so führt dies im Gegensatz zu einem herkömmlichen Datenspeicher nicht zu einem Datenverlust, sondern lediglich zu einer Verschlechterung der Auflösung des beim Auslesen der Information rekonstruierten holographischen Bildes, was in der Regel unproblematisch ist.

Der erfindungsgemäße holographische Datenspeicher lässt sich auch zum Speichern von Direktinformation nutzen. Damit ist gemeint, dass das lokale Absorptionsvermögen in der Speicherschicht so eingestellt wird, dass die gewünschte Information in der Speicherschicht als unmittelbar erkennbare Information, z.B. als Bild oder Schriftzug, abgelegt wird. Zum Lesen dieser Direktinformation sind also kein holographischer Aufbau und kein kohärentes Licht erforderlich. Je nach Größe der verwendeten Fläche der Speicherschicht kann es jedoch angebracht sein, eine Lupe oder ein Mikroskop zum Betrachten zu Hilfe zu nehmen.

Im Folgenden wird die Erfindung anhand von Ausführungsbeispielen weiter erläutert. Die Zeichnungen zeigen in
- Figur 1: eine schematische Draufsicht auf einen Ausschnitt aus einem erfindungsgemäßen holographischen Datenspeicher,
- Figur 2: einen Längsschnitt durch den holographischen Datenspeicher aus Figur 1 und
- Figur 3: einen Längsschnitt durch den holographischen Datenspeicher aus Figur 1, wobei die Vorgänge beim Auslesen von Information in schematischer Weise veranschaulicht sind.

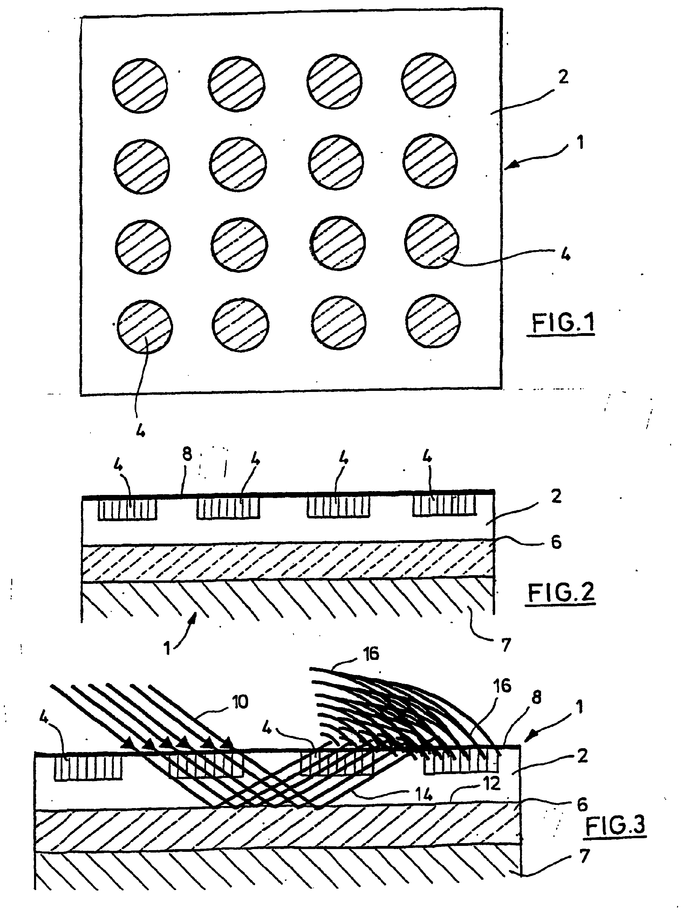

Figur 1 ist eine schematische Draufsicht auf eine Ausführungsform eines holographischen Datenspeichers 1, in den Information eingegeben ist. Der Datenspeicher 1 weist eine als Speicherschicht 2 eingerichtete Polymermatrix auf, in die Farbstoffmoleküle eingebettet sind. Im Ausführungsbeispiel besteht die Polymermatrix aus Polymethylmethacrylat (PMMA) und hat eine Dicke von 1 µm. Andere Dicken sind ebenfalls möglich. Als Farbstoff dient im Ausführungsbeispiel Sudanrot in einer derartigen Konzentration, dass sich über die Dicke der Speicherschicht 2 eine optische Dichte von 0,8 ergibt, sofern der Farbstoff in der Speicherschicht 2 nicht durch Belichtung verändert ist.

Die optische Dichte ist ein Maß für die Absorption, hier bezogen auf die Lichtwellenlänge eines Schreibstrahls. Definiert ist die optische Dichte als negativer dekadischer Logarithmus der Transmission durch die Speicherschicht 2, was mit dem Produkt des Extinktionskoeffizienten bei der verwendeten Wellenlänge des Schreibstrahls, der Konzentration des Farbstoffs in der Speicherschicht 2 und der Dicke der Speicherschicht 2 übereinstimmt. Bevorzugte Werte für die optische Dichte liegen im Bereich von 0,2 bis 1,0; andere Werte sind jedoch ebenfalls denkbar.

In dem Datenspeicher 1 ist Information in Form von Pits 4 abgelegt. In dem Bereich eines Pits 4 ist das Absorptionsvermögen in der Speicherschicht 2 anders als in den Zonen zwischen den Pits 4. Dabei kann in einem Pit die Information in binär kodierter Form gespeichert sein, indem das Absorptionsvermögen nur zwei verschiedene Werte annimmt (wobei einer der beiden Werte auch mit dem Absorptionsvermögen in der Speicherschicht 2 in den Zonen zwischen den Pits 4 übereinstimmen kann). Es ist auch möglich, in einem Pit 4 die Information in kontinuierlich kodierter Form zu speichern, wobei das Absorptionsvermögen innerhalb des Pits 4 einen beliebig ausgewählten Wert aus einem vorgegebenen Wertebereich annehmen kann. Anschaulich gesprochen, ist bei Speicherung in binär kodierter Form ein Pit "schwarz" oder "weiß", während es bei Speicherung in kontinuierlich kodierter Form auch alle dazwischenliegenden Grauwerte annehmen kann.

Im Ausführungsbeispiel hat ein Pit 4 einen Durchmesser von etwa 0,8 µm. Andere Formen als kreisrunde Pits 4 sind ebenfalls möglich, z.B. quadratische oder rechteckige Pits, aber auch andere Größen. Vorzugsweise beträgt die typische Abmessung eines Pits etwa 0,5 µm bis 1,0 µm. Die Figur 1 ist also eine stark vergrößerte Darstellung und zeigt lediglich einen Ausschnitt aus dem Datenspeicher 1.

In Figur 2 ist ein Ausschnitt aus dem Datenspeicher 1 in schematischem Längsschnitt dargestellt, und zwar nicht maßstabsgetreu. Es ist zu erkennen, dass sich im Ausführungsbeispiel ein Pit 4 nicht über die volle Dicke der Speicherschicht 2 erstreckt. In der Praxis ist aufgrund des Schreibverfahrens zum Eingeben von Information, bei dem der Farbstoff in der Speicherschicht 2 im Bereich eines Pits 4 mit Hilfe eines fokussierten Schreibstrahls verändert wird, die übergangszone im unteren Bereich eines Pits 4 zu dem unteren Bereich der Speicherschicht 2 kontinuierlich, d.h. das Absorptionsvermögen ändert sich in dieser Zone allmählich und nicht so scharf abgegrenzt, wie in Figur 2 gezeigt. Ähnliches gilt für die seitlichen Ränder eines Pits 4.

Unter (d.h. hinter) der Speicherschicht 2 befindet sich eine Reflexionsschicht 6, die im Ausführungsbeispiel aus Aluminium besteht. Die Reflexionsschicht 6 kann auch dann ihre Funktion erfüllen, wenn sie wesentlich dünner ist als die Speicherschicht 2. Vorzugsweise sind der Abstand der unteren Bereiche der Pits 4 zu der Reflexionsschicht 6 sowie die Dicke der Speicherschicht 2 so eingerichtet, dass störende Interferenz- und Überlagerungseffekte vermieden werden.

Die Speicherschicht 2 und die Reflexionsschicht 6 sind auf einen mechanischen Träger 7 aufgebracht, der im Ausführungsbeispiel aus einer Polymerfolie aus biaxial verstrecktem Polypropylen von 50 µm Dicke besteht. Andere Abmessungen und Materialien für eine Polymerfolie, aber auch biegesteif gestaltete Träger sind ebenfalls möglich. Es ist aber auch denkbar, die Speicherschicht 2 selbsttragend auszubilden. Auf die Oberseite der Speicherschicht 2 ist eine Schutzschicht 8 aufgetragen.

Im Ausführungsbeispiel wird zum Herstellen des Datenspeichers 1 zunächst die Reflexionsschicht 6 aus Aluminium auf den Träger 7 aufgedampft, dann die Polymermatrix mit dem Farbstoff der Speicherschicht 2 aufgerakelt und zum Schluss die Schutzschicht 8 aufgebracht. Als Option kann unter dem Träger 7 noch eine in den Figuren nicht dargestellte Selbstklebeschicht angeordnet werden.

Um in den Datenspeicher 1 Information einzugeben, wird zunächst in einem Hologramm-eines Speicherobjekts enthaltene holographische Information als zweidimensionale Anordnung berechnet (Amplitudenmodulation). Dies kann zum Beispiel als Simulation eines klassischen Aufbaus zum Erzeugen eines fotographisch erfassten Hologramms durchgeführt werden, bei dem kohärentes Licht von einem Laser nach Streuung an dem Speicherobjekt mit einem kohärenten Referenzstrahl zur Interferenz gebracht und das dabei entstehende Interferenzmuster als Hologramm aufgenommen wird. Die zweidimensionale Anordnung (zweidimensionaler Array) enthält dann die Information, die zum Ansteuern des Schreibstrahls eines Laserlithographen erforderlich ist. Im Ausführungsbeispiel besitzt der Laserlithograph eine Auflösung von etwa 50 000 dpi (d.h. etwa 0,5 µm). Der Schreibstrahl des Laserlithographen wird im gepulsten Betrieb (typische Pulsdauer von etwa 1 µs bis 10 µs bei einer Strahlleistung von etwa 1 mW bis 10 mW zum Eingeben eines Pits 4) über die Speicherschicht 2 des Datenspeichers 1 geführt, um die gewünschte Information sequentiell in den Datenspeicher 1 (oder einen vorgewählten Bereich des Datenspeichers 1) einzugeben. Dabei verändert der Schreibstrahl den Farbstoff in der Speicherschicht 2 entsprechend dem zweidimensionalen Array und erzeugt so die Pits 4, wie oben erläutert.

In Figur 3 ist in schematischer Weise veranschaulicht, wie die in dem Datenspeicher 1 gespeicherte Information ausgelesen werden kann. Dazu wird kohärentes Licht von einem Laser (vorzugsweise einer Wellenlänge, die von dem Farbstoff der Speicherschicht 2 signifikant absorbiert wird) auf die Oberseite des Datenspeichers 1 gerichtet. Der Übersichtlichkeit halber ist von diesem vorzugsweise parallel einfallenden kohärenten Licht in Figur 3 nur ein kleiner Ausschnitt dargestellt, der mit 10 bezeichnet ist (einfallender Lesestrahl). In der Praxis ist das kohärente Licht großflächig auf die Speicherschicht 2 gerichtet und überdeckt einen Bereich von z.B. 1 mm². Denn zur Rekonstruktion der abgespeicherten Information muss das von vielen Pits 4 ausgehende Licht erfasst werden. Die Intensität des einfallenden Lesestrahls 10 ist zu schwach, um den Farbstoff in der Speicherschicht 2 und somit die abgespeicherte Information-zu verändern.

Der einfallende Lesestrahl 10, der aus praktischen Gründen unter einem Winkel auf die Oberfläche des Datenspeichers 1 auftrifft, durchstrahlt die Speicherschicht 2 und wird an der Grenzfläche 12 zwischen der Speicherschicht 2 und der Reflexionsschicht 6 reflektiert, so dass ein reflektierter Lesestrahl 14 von der Grenzfläche 12 ausgeht. Dabei werden die Pits 4 mit ihrem unterschiedlichen lokalen Absorptionsvermögen durchdrungen, was eine Amplitudenmodulation mit periodisch unterschiedlicher Lichtabsorption bewirkt. Der einfallende Lesestrahl 10 wird so in einer definierten Art und Weise abgelenkt, mit der Folge, dass von dem Datenspeicher 1 nach Art eines Beugungsgitters Kugelwellen 16 ausgehen, die die gespeicherte holographische Information wiedergeben. In einigem Abstand von dem Datenspeicher 2 kann mit einem Detektor ein holographisches Bild erfasst werden, das durch Interferenz der Kugelwellen 16 zustande kommt. Auch an der Grenzfläche des Datenspeichers 1 gegen Luft wird der Lesestrahl reflektiert und gegebenenfalls moduliert (der Übersichtlichkeit halber nicht in Figur 3 eingezeichnet), allerdings deutlich schwächer. Dennoch muss durch geeignete Wahl der Materialien und Schichtdicken sichergestellt werden, dass es nicht zu störenden Interferenzen zwischen den verschiedenen reflektierten Strahlen kommt.

Der für den Detektor erforderliche Aufwand und die Weiterverarbeitung des erfassten holographischen Bilds hängen von der Art des Speicherobjekts ab, wie weiter oben bereits erläutert. Für die Wiedergabe von maschinenlesbaren Daten (Datenseiten) eignet sich besonders ein mit einer Datenverarbeitungseinrichtung verbundener CCD-Sensor, während für eine reine Bildwiedergabe auch ein einfacherer Detektor sinnvoll ist, insbesondere dann, wenn die Bilddaten nicht weiterverarbeitet werden sollen.

Der Datenspeicher 1 kann außer den in Figur 2 erkennbaren Schichten zusätzliche Lagen aufweisen, z.B. unterhalb des Trägers eine Klebeschicht. Mit Hilfe einer derartigen Klebeschicht kann der Datenspeicher 1 direkt auf einen Gegenstand aufgeklebt werden. Der Datenspeicher 1 kann auf diese Weise als eine Art Etikett eingesetzt werden, das praktisch unsichtbare Informationen enthält, die sich nur mit Hilfe eines holographischen Aufbaus zum Auslesen von Information entschlüsseln lassen.

Wenn ein im sichtbaren Licht unsichtbarer Farbstoff verwendet wird (der z.B. im Infraroten absorbiert), lässt sich der Datenspeicher weitgehend transparent und sehr unauffällig gestalten. Ein derartiger Datenspeicher führt nicht zu einer optischen Beeinträchtigung eines Gegenstands, an dem er als Etikett benutzt wird.

## Patentansprüche

1. Verfahren zum Speichern holographischer Information unter Verwendung eines Datenspeichers, der eine Speicherschicht (2) und eine hinter der Speicherschicht (2) angeordnete Reflexionsschicht (6) aufweist, wobei die holographische Information als zweidimensionale Anordnung berechnet und mittels eines Schreibstrahls einer Schreibeinrichtung als Hologramm in die Speicherschicht (2) eingeschrieben wird, **dadurch gekennzeichnet, dass** die Speicherschicht (2) einen durch Belichtung veränderbaren Farbstoff enthält, mittels dessen die holographische Information über das lokale Absorptionsvermögen in der Speicherschicht (2) abgespeichert wird.

2. Verfahren nach Anspruch 1, **dadurch gekennzeichnet, dass** der Farbstoff der Speicherschicht (2) durch Belichtung ausbleichbar oder zerstörbar ist.

3. Verfahren nach Anspruch 1 oder 2, **dadurch gekennzeichnet, dass** der Datenspeicher (1) einen Träger (7) für die Speicherschicht (2) aufweist.

4. Verfahren nach Anspruch 3, **dadurch gekennzeichnet, dass** der Träger (7) eine Polymerfolie aufweist.

5. Verfahren nach einem der Ansprüche 1 bis 4, **dadurch gekennzeichnet, dass** die Speicherschicht (2) eine Polymermatrix aufweist, in die Farbstoffmoleküle eingebettet sind.

6. Verfahren nach einem der Ansprüche 1 bis 5, **dadurch gekennzeichnet, dass** der Farbstoff mindestens einen der aus der folgenden Gruppe ausgewählten Farbstoffe aufweist: Azofarbstoffe, Diazofarbstoffe, Polymethinfarbstoffe, Arylmethinfarbstoffe, Aza [18] annulen-Farbstoffe.

7. Verfahren nach einem der Ansprüche 1 bis 6, **dadurch gekennzeichnet, dass** der Datenspeicher (1) eine Klebeschicht zum Aufkleben des Datenspeichers (1) auf einen Gegenstand aufweist.

8. Verfahren nach einem der Ansprüche 1 bis 7, **dadurch gekennzeichnet, dass** das lokale Absorptionsvermögen in der Speicherschicht (2) durch Ausbleichung oder Zerstörung des Farbstoffs eingestellt wird.

9. Verfahren nach einem der Ansprüche 1 bis 8, **dadurch gekennzeichnet, dass** die holographische Information in Form von Pits (4) vorgegebener Größe in die Speicherschicht (2) eingegeben wird.

10. Verfahren nach Anspruch 9, **dadurch gekennzeichnet, dass** in einem Pit (4) die holographische Information in binär kodierter Form gespeichert wird.

11. Verfahren nach Anspruch 9, **dadurch gekennzeichnet, dass** in einem Pit (4) die holographische Information in kontinuierlich kodierter Form gespeichert wird, wobei das lokale Absorptionsvermögen in dem Pit (4) aus einem vorgegebenen Wertebereich ausgewählt wird.

12. Verfahren zum Auslesen von Information aus einem Datenspeicher (1), in dem gemäß dem Verfahren nach Anspruch 1 holographische Information gespeichert worden ist, wobei die holographische Information in Form von Pits (4) vorgegebener Größe in die Speicherschicht (2) eingegeben ist, wobei Licht großflächig auf die Speicherschicht (2) des Datenspeichers (1) gerichtet wird und eine Fläche beleuchtet, die deutlich größer als die Fläche eines Pits ist, wobei die Speicherschicht (2) des Datenspeichers (1) in Transmission durchstrahlt wird, und wobei als Rekonstruktion der in dem durchstrahlten Bereich mittels des lokalen Absorptionsvermögens gespeicherten holographischen Information ein holographisches Bild (16) in einem Abstand zu dem Datenspeicher (1) erfasst wird.

13. Verfahren nach Anspruch 12, **dadurch gekennzeichnet, dass** kohärentes Licht (10) großflächig auf die Speicherschicht (2) des Datenspeichers (1) gerichtet wird.

14. Verfahren nach Anspruch 12 oder 13, **dadurch gekennzeichnet, dass** das Licht an einer Reflexionsschicht (6) hinter der Speicherschicht (2) reflektiert wird.

15. Verfahren nach einem der Ansprüche 12 bis 14, **dadurch gekennzeichnet, dass** das holographische Bild von einem mit einer Datenverarbeitungseinrichtung verbundenen CCD-Sensor erfasst wird.

## Claims

1. Method for storing holographic information using a data storage means having a storage layer (2) and, arranged behind the storage layer (2), a reflection layer (6), wherein the holographic information is calculated as a two-dimensional arrangement and is written as a hologram into the storage layer (2) using a writing beam of a writing device, **characterized in that** the storage layer (2) contains a dye, which is changeable by way of illumination and which is used to store in the storage layer (2) the holographic information relating to the local absorption capacity.

2. Method according to Claim 1, **characterized in that** the dye of the storage layer (2) is bleachable or destructible by illumination.

3. Method according to Claim 1 or 2, **characterized in that** the data storage means (1) has a carrier (7) for the storage layer (2).

4. Method according to Claim 3, **characterized in that** the carrier (7) has a polymer film.

5. Method according to one of Claims 1 to 4, **characterized in that** the storage layer (2) has a polymer matrix in which dye molecules are embedded.

6. Method according to one of Claims 1 to 5, **characterized in that** the dye has at least one of the dyes selected from the following group: azo dyes, diazo dyes, polymethine dyes, arylmethine dyes, aza[18]annulene dyes.

7. Method according to one of Claims 1 to 6, **characterized in that** the data storage means (1) has an adhesive layer for adhesively bonding the data storage means (1) onto an article.

8. Method according to one of Claims 1 to 7, **characterized in that** the local absorption capacity in the storage layer (2) is set by bleaching or destroying the dye.

9. Method according to one of Claims 1 to 8, **characterized in that** the holographic information is input into the storage layer (2) in the form of pits (4) of pre-specified size.

10. Method according to Claim 9, **characterized in that** the holographic information is stored in a pit (4) in binary coded form.

11. Method according to Claim 9, **characterized in that** the holographic information is stored in a pit (4) in continuously coded form, with the local absorption capacity in the pit (4) being selected from a pre-specified value range.

12. Method for reading information from a data storage means (1), in which holographic information has been stored in accordance with the method according to Claim 1, wherein the holographic information is input into the storage layer (2) in the form of pits (4) of pre-specified size, wherein light is directed over a large area onto the storage layer (2) of the data storage means (1) and illuminates an area that is considerably larger than the area of a pit, wherein light passes through the storage layer (2) of the data storage means (1) in transmission, and wherein a holographic image (16) is acquired at a distance from the data storage means (1) as a reconstruction of the holographic information that is stored in the region through which light passes by means of the local absorption capacity.

13. Method according to Claim 12, **characterized in that** coherent light (10) is directed over a large area onto the storage layer (2) of the data storage means (1).

14. Method according to Claims 12 or 13, **characterized in that** the light is reflected at a reflection layer (6) behind the storage layer (2).

15. Method according to one of Claims 12 to 14, **characterized in that** the holographic image is acquired by a CCD sensor, which is connected to a data processing device.

## Revendications

1. Procédé de mise en mémoire d'informations holographiques avec recours à une mémoire de données qui présente une couche de mémoire (2) et une couche réfléchissante (6) disposée en arrière de la couche de mémoire (2), les informations holographiques étant calculées sous la forme d'un agencement bidimensionnel et étant inscrites dans la couche de mémoire (2) sous la forme d'un hologramme au moyen d'un faisceau d'écriture d'un dispositif d'écriture,
**caractérisé en ce que**
la couche de mémoire (2) contient un colorant qui varie lorsqu'il est éclairé et au moyen duquel les informations holographiques sont conservées dans la couche de mémoire (2) par l'intermédiaire de la capacité locale d'absorption.

2. Procédé selon la revendication 1, **caractérisé en ce que** le colorant de la couche de mémoire (2) peut être décoloré ou détruit par éclairage.

3. Procédé selon la revendication 1 ou 2, **caractérisé en ce que** la mémoire de données (1) présente un support (7) pour une couche de mémoire (2).

4. Procédé selon la revendication 3, **caractérisé en ce que** le support (7) présente un film polymère.

5. Procédé selon l'une des revendications 1 à 4, **caractérisé en ce que** la couche de mémoire (2) présente une matrice polymère dans laquelle des molécules de colorant sont incorporées.

6. Procédé selon l'une des revendications 1 à 5, **caractérisé en ce que** le colorant présente un des colorants sélectionnés dans l'ensemble suivant : les colorants azo, les colorants diazo, les colorants à la polyméthine, les colorants à l'arylméthine et les colorants à l'aza[18] annulène.

7. Procédé selon l'une des revendications 1 à 6, **caractérisé en ce que** la mémoire de données (1) présente une couche adhésive qui permet de coller la mémoire de données (1) sur un objet.

8. Procédé selon l'une des revendications 1 à 7, **caractérisé en ce que** la capacité locale d'absorption de la couche de mémoire (2) est ajustée par décoloration ou destruction du colorant.

9. Procédé selon l'une des revendications 1 à 8, **caractérisé en ce que** les informations holographiques sont introduites dans la couche de mémoire (2) sous la forme de creux (4) de taille prédéterminée.

10. Procédé selon la revendication 9, **caractérisé en ce que** les informations holographiques sont conservées en mémoire sous une forme codée en binaire dans un creux (4).

11. Procédé selon la revendication 9, **caractérisé en ce que** les informations holographiques sont conservées dans la mémoire sous forme codée de manière continue dans un creux (4), la capacité locale d'absorption dans le creux (4) étant sélectionnée dans une plage prédéterminée de valeurs.

12. Procédé de lecture d'informations dans une mémoire de données (1) dans laquelle des informations holographiques ont été conservées par recours au procédé selon la revendication 1, les informations holographiques étant introduites dans la couche de mémoire (2) sous la forme de creux (4) de taille prédéterminée, la lumière étant orientée sur une grande surface de la couche de mémoire (2) de la mémoire de données (1) en éclairant une surface nettement plus grande que la surface d'un creux, la couche de mémoire (2) de la mémoire de données (1) étant irradiée en transmission, une image holographique (16) étant saisie à distance de la mémoire de données (1) en tant que reconstruction des informations holographiques conservées en mémoire au moyen de la capacité locale d'absorption dans la plage irradiée en transmission.

13. Procédé selon la revendication 12, **caractérisé en ce que** de la lumière cohérente (10) est orientée sur une grande surface de la couche de mémoire (2) de la mémoire de données (1).

14. Procédé selon la revendication 12 ou 13, **caractérisé en ce que** la lumière est réfléchie sur une couche réfléchissante (6) située en arrière de la couche de mémoire (2).

15. Procédé selon l'une des revendications 12 à 14, **caractérisé en ce que** l'image holographique est saisie par un capteur CCD relié à un dispositif de traitement de données.
